Europäisches Patentamt

European Patent Office

Office européen des brevets

(11) Numéro de publication : **0 480 806 A1**

## (12) DEMANDE DE BREVET EUROPEEN

(21) Numéro de dépôt : **91402654.7**

(51) Int. Cl.$^5$ : **G06K 9/52,** G06K 9/68

(22) Date de dépôt : **04.10.91**

(30) Priorité : **09.10.90 FR 9012445**

(43) Date de publication de la demande :
**15.04.92 Bulletin 92/16**

(84) Etats contractants désignés :
**DE GB IT NL**

(71) Demandeur : **THOMSON-CSF**
**51, Esplanade du Général de Gaulle**
**F-92800 Puteaux (FR)**

(72) Inventeur : **Ferre, Alain**
**THOMSON-CSF, SCPI, Cédex 67**
**F-92045 Paris la Défense (FR)**
Inventeur : **Villalon, Yannick**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé de reconnaissance d'objets dans des images et son application au suivi d'objets dans des séquences d'images.**

(57) Le procédé de reconnaissance d'objets dans des images selon l'invention comporte une phase d'apprentissage au cours de laquelle la zone objet à reconnaître sélectionnée dans une image d'apprentissage est modélisée, et une phase de reconnaissance au cours de laquelle la zone modélisée est comparée à des zones image de même taille prises dans les images à traiter. Le procédé utilise, pour la caractérisation des zones d"images modèle d'objet à reconnaître ou zones d'images à traiter, une décomposition des matrices des valeurs de luminance en valeurs singulières selon un produit matriciel de matrices de projection et d'une matrice diagonale ordonnée, cette dernière constituant une signature caractéristique de la zone considérée ; pour la phase de reconnaissance, des écarts entre la signature de la zone modèle et les signatures de la zones de l'image considérée sont calculés et des zones d'image sont sélectionnées à partir des moindres écarts selon un procédé itératif qui consiste à effectuer un tri grossier sur un grand nombre de zones dans un premier temps, puis un tri de plus en plus fin sur un nombre de plus en plus restreint de zones. Les calculs effectués à chaque étape sont réutilisés à l'étape suivante.

FIG. 4

EP 0 480 806 A1

L'invention se rapporte au domaine du traitement de l'image et a plus particulièrement pour objet un procédé,de reconnaissance de formes dans des images et son application au suivi d'objets dans des séquences d'images.

Les procédés actuellement connus pour effectuer la reconnaissance d'objets dans les images utilisent des méthodes par corrélation binaire ou multiniveaux dans le domaine spatial ou dans un domaine transformé, ou des méthodes de comparaison utilisant des descripteurs de formes.

La reconnaissance d'objets dans une image repose d'une manière générale, sur la recherche de motifs dans l'image les plus ressemblants à des modèles connus.

Le modèle de reconnaissance d'un objet peut prendre différentes formes mais caractérise toujours une représentation précise des caractéristiques de l'objet à reconnaître. Il peut s'agir d'une matrice de points, d'une collection d'éléments géométriques, d'un ensemble de contours ou bien encore d'une décomposition dans un domaine particulier (Transformée de Fourier, Transformée de Hadamard, ondelettes, etc...).

Ces méthodes sont pour la plupart très coûteuses en temps de calcul lorsque l'on souhaite que leur soient attachées une grande sûreté et une grande robustesse.

L'invention a pour objet un procédé, et le dispositif correspondant de reconnaissance de formes dans lequel la fiabilité et la robustesse des résultats sont obtenues sans que le coût en temps de calcul soit trop grand. Pour cela le procédé utilise, pour cette reconnaissance, une décomposition en valeurs singulières de l'image ou "S.V.D", pour "Singular Value Decomposition" selon la terminologie anglo-saxonne.

La décomposition en valeurs singulières d'un objet représenté par une matrice le points caractérise cet objet par sa "signature" sur un espace de projection défini par deux projecteurs. Cette signature constituée des valeurs singulières de la matrice objet définit le modèle de reconnaissance. Un objet est alors défini par trois matrices notées U, V et S : La matrice S est une matrice diagonale ordonnée. L'ensemble des valeurs de la diagonale correspond à la signature de l'objet. Les matrices U et V sont les matrices de projection.

Un objet est "reconnu" si sa signature après projection est proche de la signature recherchée. En effet il existe une relation quasi univoque entre la signature et la zone à laquelle elle correspond.

Suivant l'invention, la reconnaissance est effectuée suivant un procédé itératif sur les valeurs propres :

La première étape du procédé consiste à effectuer un premier tri de toutes les zones possibles en n'utilisant qu'une première valeur propre.

A la ième étape, un tri sera effectué parmi les zones sélectionnées à l'étape précédente sur un nombre plus grand de valeurs propres.

Le procédé consiste donc à effectuer un tri grossier sur un grand nombre de zones dans un premier temps, puis un tri de plus en plus fin sur un nombre de plus en plus restreint de zones. Les calculs effectués à chaque étape sont réutilisés à l'étape suivante.

Un premier objet de l'invention est un procédé de reconnaissance d'objets dans des images comportant une phase d'apprentissage au cours de laquelle la zone objet à reconnaître sélectionnée dans une image d'apprentissage est modélisée, et une phase de reconnaissance au cours de laquelle la zone modélisée est comparée à des zones image de même taille prises dans les images à traiter, caractérisé en ce qu'il utilise, pour la caractérisation des zones d'images modèles d'objets à reconnaître ou des zones d'images à traiter, une décomposition des matrices des valeurs de luminance en valeurs singulières selon un produit matriciel de matrices de projection et d'une matrice diagonale ordonnée, cette dernière constituant une signature caractéristique de la zone considérée, et en ce que pour la phase de reconnaissance, des écarts entre la signature de la zone modèle et les signatures de zones de l'image considérée sont calculés et des zones d'image sont sélectionnées à partir des moindres écarts selon un procédé itératif tel que

– dans une première étape seul le premier coefficient des matrices signature ordonnées est considéré pour le calcul des écarts mais pour toutes les zones d'image possibles,

– puis dans une seconde étape les $p_2$ premiers coefficients des matrices signature, $p_2$ supérieur à 1, sont considérés pour un ensemble réduit de $n_1$ zones d'image sélectionnées à l'étape précédente comme présentant les moindres écarts,

– dans une ième étape, un nombre $p_i$ supérieur à $p_{i-1}$, de coefficients des matrices est considéré pour un ensemble réduit de $n_i$ zones d'image sélectionnées à l'étape (i-1) car présentant les écarts les plus faibles, i variant de 3 à k-1,

– dans une kième et dernière étape, tous les coefficients des matrices signatures de zones d'image sélectionnées à l'avant dernière étape sont considérées pour sélectionner la zone d'image présentant l'écart de signature le plus faible avec la zone modèle.

Un deuxième objet de l'invention est l'application du procédé au suivi d'objets dans des séquences d'images.

L'invention sera mieux comprise et d'autres caractéristiques apparaîtront à l'aide de la description qui suit, en référence aux figures annexées :

Les figures 1 et 2 illustrent respectivement une image dans laquelle est sélectionnée une zone comportant un objet à reconnaître, et une seconde image dans laquelle cet objet doit être retrouvé ;

– La figure 3 est un schéma explicatif ;

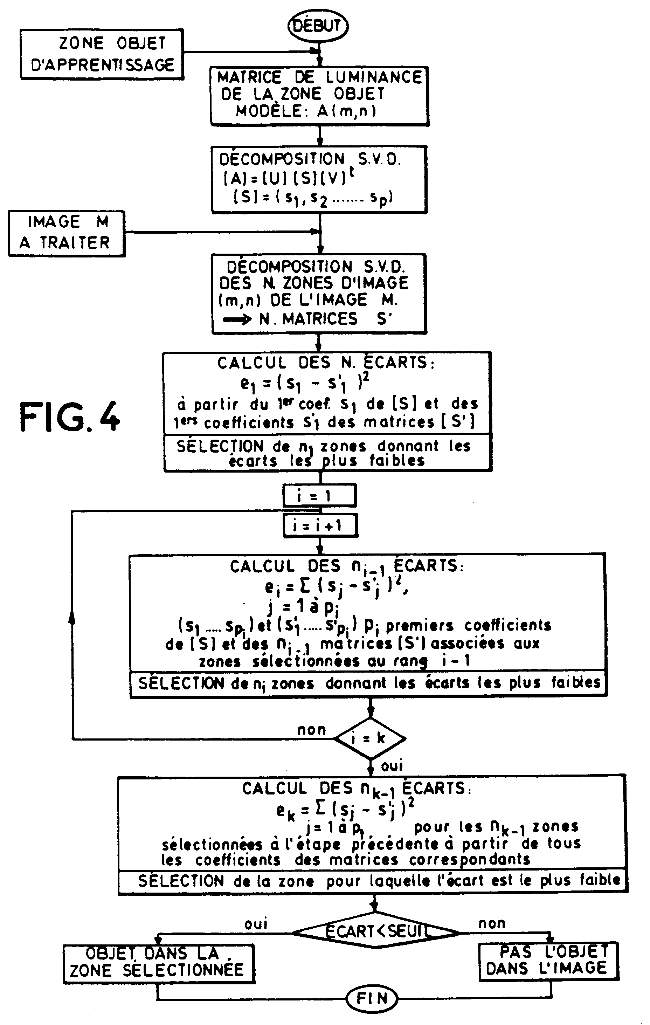

– La figure 4 illustre le procédé de reconnaissance suivant l'invention.

La transformation en valeurs singulières (S V D) présente un intérêt en traitement de l'image pour des applications de compression, de filtrage et de reconnaissance de formes.

Comme indiqué succinctement ci-dessus la transformation par décomposition en valeurs singulières consiste à décomposer une image (ou partie d'image) dont les valeurs de luminance des points forment une matrice A de taille (m, n) rectangulaire ou carrée, en produit matriciel défini par :

$[A] = [U] [S] [V]^t$, où $|V|^t$ est la matrice transposée de $|V|$, et où la matrice S est une matrice diagonale ordonnée telle que :

$$[S] = \mathrm{diag}(s_1, s_2, s_3, s_4, \ldots s_p) \text{ avec } p = \min(m,n).$$

Ces éléments diagonaux $s_1 \ldots s_p$ sont les valeurs singulières de la matrice A et sont des réels positifs (racines carrées positives des valeurs propres) classés par ordre décroissant :

$$s_1 > s_2 > s_3 > \ldots > s_p.$$

Les matrices [U] et [V] de tailles respectives (m, p) et (p, n) regroupent dans leurs colonnes les vecteurs singuliers gauches (U) et droites (V) de A. Les colonnes $u_i$ de [U] sont les vecteurs propres de [A]. $[A]^t$ alors que les colonnes $v_i$ de [V] sont les vecteurs propres de $[A]^t$. [A].

$[U] = [u_1, u_2 \ldots u_p]$ ; $u_i$ est un vecteur colonne de taille m ;

$[V] = [v_1, v_2 \ldots v_n]$ ; $v_i$ est un vecteur colonne de taille p.

Ces matrices ont les particularités suivantes :

$$[U]^t[U] = [V].[V]^t = I_p$$

où $I_p$ est la matrice identité de dimension (p,p).

La matrice diagonale [S] est telle que :.

$$[S] = \mathrm{diag}(s_1, s_2, s_3, \ldots s_r, \ldots s_p)$$

avec

$$s_1 > s_2 \ldots s_r > 0; \quad s_{r+1} = \ldots = s_p = 0$$

où r est le rang de la matrice A. Les vecteurs propres et les valeurs singulières sont définis par les relations suivantes :

$$A.\, v_i = s_i.\, u_i$$
$$A^t\, u_i = s_i.\, v_i$$

La transformation par décomposition en valeurs singulières peut donc être représentée sous la forme suivante :

$$A = \sum_{i=1,p} (s_i\, u_i\, v_i^{\ t})$$

Plusieurs méthodes ont été développées pour déterminer les matrices [U], [V], [S].

La décomposition en valeurs singulières est calculée en appliquant l'algorithme de GOLUB/REINSCH relatif à la méthode de GOLUB/KAHAN classique dans les traitements de matrice.

Cette méthode consiste dans un premier temps à transformer la matrice [A] en matrice bidiagonale par la méthode HOU-SEHOLDER, puis à partir de cette forme bidiagonale à calculer les valeurs singulières. Cette méthode est efficace, rapide et convergente. Cependant, elle est difficilement adaptable au calcul multiprocesseurs.

Un autre type de méthode dite"the SVD power algorithm" est couramment développé. Cette méthode utilise un procédé itératif :

$$su = [A]\, v$$

et

$$sv = [A]^t\, u$$

si k est le rang d'itération précédent :

$$u^{(k+1)} = [A]v(k)/ ||[A]v^{(k)}||$$
$$v^{(k+1)} = [A]U(k+1)+1)/||[A]^t u^{(k+1)}||$$

Le procédé itératif se poursuit jusqu'au moment où $||u^{(k+1)} - u^{(k)}||$ est inférieur à une valeur fixée. La première valeur singulière vaut alors :

$$s_1 = ||[A]^t u^{(k+1)}||.$$

Les vecteurs $u_1$ et $v_1$ sont donnés respectivement par les vecteurs $u^{k+1}$ et $v^{k+1}$ issus respectivement de la dernière itération.

Pour obtenir le couple de vecteurs suivant $(u_2, v_2)$, le procédé est réitéré en considérant non plus la matrice A mais la matrice A' définie par :

$$[A]' = [A] - s_1 u_1 v1^t$$

Ce type d'algorithme peut présenter des problèmes de convergence et de stabilité. Il est cependant bien adapté à des applications n'utilisant que les premières valeurs singulières.

Enfin, une autre catégorie d'algorithme est basée sur la méthode de HESTENES/NASH dite : "One side transformation" qui permet de rechercher les valeurs singulières d'une matrice en appliquant des séquences de rotations planes sur les colonnes ou les lignes. Cette méthode ne permet qu'une décomposition complète de l'image et est particulièrement adaptée aux matrices de faible taille.

Le temps de calcul nécessaire pour effectuer cette décomposition, quelle que soit la méthode adoptée, ne représente qu'une infime partie du temps calcul qui sera utilisé pour la reconnaissance du motif dans une image. De plus, l'apprentissage n'est pas soumis aux contraintes de durée imposées lors de la reconnaissance.

Le choix de la méthode de décomposition n'est donc pas critique et l'une ou l'autre des méthodes décrites ci-dessus peut être utilisée, l'optimisation étant surtout indispensable au niveau du procédé de reconnaissance proprement dit.

L'algorithme de calcul des différentes matrices dépend du type de calculateur qui sera utilisé pour calculer la décomposition en valeurs singulières (parallèle, série ...) et n'est pas décrit en détails dans la présente description car à la portée de l'homine du métier.

En utilisant une telle décomposition, l'énergie de l'image est concentrée sur les premiers coefficients ($s_1$, $s_2$, ...). Les derniers coefficients (... $s_{p-1}$, $s_p$) correspondent aux détails et au bruit contenus dans l'image.

Cette propriété est utilisée pour des applications à la reconnaissance de formes dans l'image. La reconnaissance est obtenue en considérant l'ensemble [S] comme étant la signature du modèle à reconnaître. La reconnaissance le formes est alors obtenue en deux phases :

La première phase consiste à effectuer un apprentissage sur le modèle à reconnaître défini par une matrice rectangulaire (ou carrée) des valeurs de luminance entourant au mieux l'objet à caractériser. L'apprentissage consiste à calculer les trois matrice [U], [V], [S] définissant ce modèle de manière unique et complète.

La deuxième phase consiste à rechercher dans une image à traiter la partie d'image correspondant au mieux au modèle.

Cette phase de recherche est menée en cherchant à reconnaître l'objet A dans l'image M par l'intermédiaire de sa signature [S]. Pour cela, les signatures $[S_{lc}]$ de chacune des zones d'image $M_{lc}$ qui composent l'image M sont calculées pour ensuite être comparées à la signature S de l'objet à reconnaître.

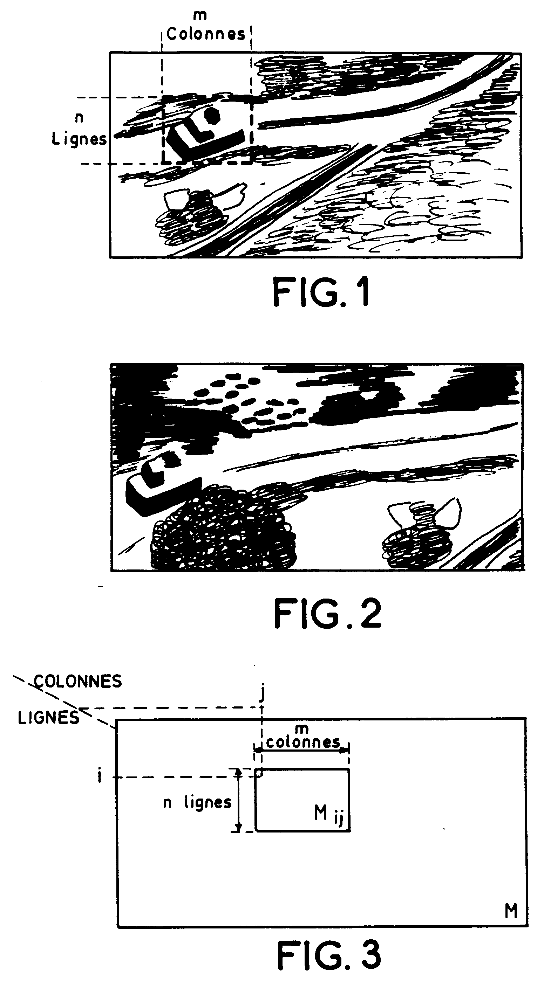

Une zone image $M_{lc}$ telle qu'illustrée par la figure 3 est une matrice A' de taille $(m, n)$ égale à celle de la matrice objet A, extraite de l'image à la position $(l, c)$. La signature correspondante $[S_{lc}]$ est calculée de la même manière que celle de la matrice A.

La comparaison entre les deux signatures [S] et $[S_{lc}]$ qui doit permettre d'apprécier la ressemblance s'effectue en calculant l'écart, ou la "distance", qui sépare les deux matrices [S] et $[S_{lc}]$. Cet écart est égal à

$$e = \left| S - S_{lc} \right|^2 = \sum_{i=1\text{à}p} \left| s_i - s'_i \right|^2$$

avec

$$\left| S_{lc} \right| = \text{diag}(s'_1, s'_2 \ldots s'_p)$$

Cet écart e mesure la "similitude" de signatures du modèle et de la zone image examinée.

La recherche du motif dans l'image pourrait théoriquement être effectuée en considérant toutes les zones de taille m x n de l'image par glissement et en calculant pour chacune de ces zones une signature et l'écart entre cette signature et la signature de l'objet. La position du motif est alors la position de la zone image à partir de laquelle a été calculé le plus faible écart e

Cette recherche effectuée sur l'image entière en prenant en compte toutes les valeurs propres est une opération peu réaliste du fait du nombre de calculs à mettre en oeuvre, et cette solution ne permettrait pas de résoudre le problème qui est l'optimisation du report temps de calcul, sûreté et robustesse du procédé. Il est donc prévu dans le procédé selon l'invention de limiter le nombre de calculs. Une première possibilité serait de limiter le nombre de valeurs propres. Ceci est une opération délicate car le nombre de valeurs propres à conserver dépend des caractéristiques des objets à trier : si deux objets sont proches, il est nécessaire de considérer un grand nombre de valeurs propres pour les différencier, alors que si ils sont très différents, un nombre limité de valeurs propres suffit.

Pour limiter le nombre de calculs, une méthode itérative dite "top down" a été utilisée. Cette méthode consiste à sélectionner à chaque étape un ensemble de zones d'image candidat, suivant une résolution croissante et sur un champ de recherche de taille décroissante :

– La première étape sélectionne un nombre $n_1$ de zones suivant les valeurs décroissantes de l'écart de e calculées à partir d'une seule valeur propre, pour toutes les zones de l'image.

L'écart pour chaque zone est calculé de la manière suivante :

$$e = (s_1 - s'_1)^2$$

$$\text{où } s'_1 = \sum_{k=1,m} [U(k,1) \sum_{r=1,m} A'(k,r)*V(r,1)]$$

Les $n_1$ positions des zones conduisant aux écarts les plus faibles sont conservées et seront utilisées à l'étape suivante.

– La deuxième étape trie parmi ces $n_1$ zones d'image un nombre $n_2$ de zones d'image suivant les valeurs décroissantes des écarts calculés en considérant $p_2$ valeurs propres.

L'écart s'écrit :

$$e = \sum_{i = 1 \text{ à } p_2} (s_i - s'_i)^2$$

$$\text{où } s'_i = \sum_{k=1,m} [U(k,i) \sum_{r=1,n} A'(k,r)*V(r,i)]$$

– A la ième étape, $n_i$ zones d'image sont retenues, toujours suivant un critère de tri suivant les valeurs de d'écarts décroissantes, parmi les $n_{i-1}$ zones candidates retenues à l'étape précédente, i-1, l'écart étant calculé suivant $p_i$ valeurs propres.

– La dernière étape de sélection permet de sélectionner la zone d'image conduisant à l'écart minimal à partir de toutes les valeurs propres des matrices correspondant aux zones retenues à l'étape précédente. Les nombres de zones et de valeurs propres retenues pour les calculs dans les différentes étapes sont donc tels que : .

$$n_1 > n_2 > n_3 > .... > 1 \text{ (nombre de zones-image)}$$
$$1 < p_2 < p_3 < .... < p_t \text{ (nombre de valeurs propres)}$$

où $p_t$ représente le nombre total de valeurs propres.

– Une étape finale consiste à effectuer une comparaison entre la signature de la zone objet et la signature de la zone d'image retenue dans la dernière étape du procédé itératif, la zone d'image retenue ne conduisant à la reconnaissance de l'objet que si les signatures sont suffisamment proches, l'écart correspondant étant par exemple inférieur à un seuil fixe prédéterminé.

Dans un mode de réalisation, un nombre de 10 itérations a été utilisé (quelle que soit la taille de l'objet d'apprentissage).

Deux contraintes ont été introduites :

1. Pour les 5 premières itérations, le nombre de valeurs propres utilisé correspond au rang de l'itération (1ère itération, 1 valeur propre ; 2ième itération, 2 valeurs propres ; ... ; 5ième itération, 5 valeurs propres). La taille de l'objet à rechercher est supposée être supérieure à 10 x 10 pixels.

2. A la dernière étape, toutes les valeurs propres sont considérées.

La première itération consiste donc en une sélection grossière et rapide des zones d'image susceptibles de satisfaire aux caractéristiques de la zone objet utilisée pour l'apprentissage, et les itérations successives permettent une sélection de plus en plus fine des zones d'image possibles, jusqu'à la dernière étape où une seule zone est sélectionnée.

Pour chaque itération de rang supérieur à 5, le nombre de valeurs propres prises en compte a été calculé suivant la formule :

$$p_i = Ent [a * (exp(k*i) - 1)] \text{ où Ent signifie partie entière de l'expression entre crochets,}$$

et

$$a = 25/ (p_t - 100)$$

et

$$k = 1/5 * \log (p_t/5 - 1)$$

où pt correspond au nombre maximal de valeurs propres ; avec les contraintes précédentes

$$p_5 = 5 \text{ et } p_{10} = pt.$$

Des perfectionnements sont utiles, notamment si l'objet à reconnaître a subi, du modèle à l'image traitée, une variation de luminance uniforme. L'objet à rechercher dans l'image peut en effet avoir subi une variation de luminance due à un éclairement différent (imagerie visible) ou à une modification de température (imagerie infrarouge ).

Dans ce cas, le procédé tel que défini précédemment ne permet pas de retrouver l'objet dans l'image. Il est alors nécessaire d'introduire le perfectionnement suivant :

Une zone d'image A est considérée comme étant constituée de deux composantes :

– une composante d'information A1 représentée par une matrice de taille m x n ;

– une composante de variation de luminance : AL également représentée par une matrice de taille m x n.

Ces deux matrices sont telles que :

$$A = A1 + AL$$

et

$$AL = k \times II$$

où II est une matrice de dimension n x m constituée de 1 et où le coefficient k représente la différence de luminance moyenne entre la zone d'image candidate et la zone objet d'apprentissage.

L'enchaînement des phases du procédé de reconnaissance est identique à celui décrit précédemment, à la modification près suivante :

La contribution de la variation de luminance est retirée à la matrice S'pour donner une matrice réduite :

$$SR' = S' - k \cdot Ut * II * V$$

où les coefficients de la matrice diagonale SR' sont tels que $sr'_i = s'_i - k \, corr \, (i,j)$

Le coefficient k doit être calculé pour chaque sous-image à la première itération et être conservé pour les itérations suivantes :

La valeur corr ( i, j) est telle que :

$$corr(i,j) = \sum_{r,k} u_k^t \cdot v_r$$

avec

$$k = 1,m \text{ et } r = 1,n.$$

Les éléments de cette matrice doivent être complétés pour chaque nouvelle itération.

L'écart e pour chaque sous-image s'écrit alors :

$$e = \sum (s_i - sr'_i)^2, \text{ avec } i \text{ variant entre 1 et } p_i.$$

Pour une variation uniforme de luminance et un nombre faible de cas de saturation (ceci exclut le cas d'une saturation trop importante et les réponses non linéaires des capteurs), le procédé a été mis en oeuvre en introduisant un décalage (offset) sur les valeurs de luminance de 100 (ce qui introduit une saturation de l'ordre de 2% dans l'image).

La sensibilité du procédé a été vérifiée en additionnant aux valeurs de luminance un bruit gaussien : l'écart augmente en fonction de l'augmentation de la valeur de bruit (4 valeurs propres ont été utilisées ).

L'influence de la rotation de l'objet dans l'image a également été analysée. L'écart calculé évolue en fonction de la rotation de la sous-image : On observe une augmentation de l'écart en fonction de l'angle de rotation, mais l'effet de l'écart sur la détection d'un objet reste faible pour des angles de rotation de 10 et 20 degrés successivement. La reconnaissance n'est plus correcte pour un angle supérieur ou égal à 30 degrés.

L'ensemble des valeurs propres représente une bonne signature de l'objet et permet une reconnaissance sûre et robuste de celui-ci.

Pour la mise en oeuvre du procédé, un algorithme optimisant le temps de calcul a donc été défini. La reconnaissance est effectuée en plusieurs étapes. Chaque étape correspond à une résolution. L'initialisation est faite à une résolution grossière (sur les premiers valeurs propres). La dernière étape permet de sélectionner l'objet suivant une résolution fine (toutes les valeurs propres sont considérées). Pour cela, en résumé :

– la première étape de la procédure consiste à effectuer un premier tri des zones d'image sur la première valeur propre ;

– à la ième étape, un tri est effectué sur les zones d'image sélectionnées à l'étape précédente sur un nombre plus grand de valeurs propres ;

– à la dernière étape une seule zone d'image est retenue en considérant pour les zones d'image de l'étape précédente l'ensemble des valeurs propres.

Ce procédé est utilisable par exemple dans une application au suivi et à l'identification, dans une suite d'images fixe, la signature de l'objet poursuivi devant être rafraîchie régulièrement pour tenir compte des modifications de formes dues à l'observation sous des angles différents et des masquages souvent observés dans ce type d'applications.

La mise en oeuvre de ce procédé est évidemment effectuée par des moyens de traitement et de calculs informatiques convenablement programmés qui, à partir des valeurs de luminance des pixels des images, permettent de sélectionner dans une image de référence une zone image correspondant à l'objet à détecter, de traiter cette zone objet pour en déterminer la signature au sens défini ci-dessus, puis de traiter les images dans lesquelles l'objet est recherché, selon le procédé itératif décrit ci-dessus.

**Revendications**

**1 -** Procédé de reconnaissance d'objets dans des images comportant une phase d'apprentissage au cours de laquelle la zone objet à reconnaître sélectionnée dans une image d'apprentissage est modélisée, et une phase de reconnaissance au cours de laquelle la zone modélisée est comparée à des zones image de même taille prises dans les images à traiter, caractérisé en ce qu'il utilise, pour la caractérisation des zones d'images modèle d'objet à reconnaître ou zones d'images à traiter, une décomposition des matrices des valeurs de luminance en valeurs singulières selon un produit matriciel de matrices de projection et d'une matrice diagonale ordonnée, cette dernière constituant une signature caractéristique de la zone considérée, et en ce que pour la phase de reconnaissance, des écarts entre la signature de la zone modèle et les signatures de la zones de l'image considérée sont calculés et des zones d'image sont sélectionnées à partir des moindres écarts selon un procédé itératif tel que

– dans une première étape seul le premier coefficient des matrices signature ordonnées est considéré pour le calcul des écarts mais pour toutes les zones d'image possibles,

– puis dans une seconde étape les $p_2$ premiers coefficients des matrices signature, $p_2$ supérieur à 1, sont considérés pour un ensemble réduit de $n_1$ zones d'image sélectionnées à l'étape précédente comme présentant les moindres écarts,

– dans une ième étape, un nombre $p_i$ supérieur à $p_{i-1}$, de coefficients des matrices est considéré pour un ensemble réduit de $n_i$ zones d'image sélectionnées à l'étape (i-1) car présentant les écarts les plus faibles, i variant de 3 à k-1,

– dans une kième et dernière étape, tous les coefficients des matrices signatures de zones d'image sélectionnées à l'avant dernière étape sont considérées pour sélectionner la zone d'image présentant l'écart de signature le plus faible avec la zone modèle.

**2 -** Procédé selon la revendication 1, caractérisé en ce que ($s_1,... s_i,... s_p$) étant les coefficients de la matrice signature ordonnée de la zone modèle et ( $s'_1, . . . s'_i. . . s'_p$) étant les coefficients de la matrice signature ordonnée d'une zone d'image à analyser, l'écart calculé à la première étape est $(s_1-s'_1)^2$ et à une étape ultérieure j, l'écart calculé est égal à

$$\sum \ (s_i\text{-}s'_i)^2,$$

$$i = 1 \text{ à } p_j$$

où j est le rang de l'étape du procédé itératif et $p_j$ le nombre de valeurs propres utilisées à cette étape.

**3 -** Procédé selon la revendication 1, caractérisé en ce que la phase de reconnaissance est suivie d'une étape finale de comparaison entre les signatures selon laquelle l'objet de la zone modèle n'est reconnu dans la sous-image sélectionnée à l'issue de la phase de reconnaissance que si sa signature est proche de la signature de la zone modèle, l'écart entre leurs signatures respectives étant inférieur à un seuil prédéterminé.

**4 -** Procédé selon l'une des revendications 1 et 2, caractérisé en ce que le procédé itératif est tel que pour les premières étapes, le nombre de coefficients des matrices signature utilisés pour les calculs d'écarts est égal au rang de l'itération et en ce que pour les étapes suivantes, le nombre de coefficients est déterminé pour augmenter progressivement jusqu'à la valeur finale $p_t$, où $p_t$ est le nombre maximal de coefficients des matrices signature.

**5 -** Procédé selon l'une des revendications précédentes, caractérisé en ce que, lorsque l'objet à traiter subit des variations de luminance, la matrice signature de la sous-image analysée est préalablement traitée pour en extraire la variation de luminance, de façon que les signatures de la zone modèle de l'objet et de la sous-image analysée soient comparables.

FIG.1

FIG.2

FIG.3

DÉBUT

ZONE OBJET
D'APPRENTISSAGE

MATRICE DE LUMINANCE
DE LA ZONE OBJET
MODÈLE: $A(m,n)$

DÉCOMPOSITION S.V.D.
$[A] = [U] [S] [V]^t$
$[S] = (s_1, s_2 \ldots\ldots s_p)$

IMAGE M
A TRAITER

DÉCOMPOSITION S.V.D.
DES N ZONES D'IMAGE
$(m,n)$ DE L'IMAGE M.
$\longrightarrow$ N. MATRICES S'

CALCUL DES N. ÉCARTS:
$e_1 = (s_1 - s'_1)^2$
à partir du $1^{er}$ coef. $s_1$ de $[S]$ et des
$1^{ers}$ coefficients $s'_1$ des matrices $[S']$

SÉLECTION de $n_1$ zones donnant les
écarts les plus faibles

**FIG.4**

$i = 1$

$i = i+1$

CALCUL DES $n_{i-1}$ ÉCARTS:
$e_i = \sum (s_j - s'_j)^2$,
$j = 1$ à $p_i$
$(s_1 \ldots s_{p_i})$ et $(s'_1 \ldots s'_{p_i})$ $p_i$ premiers coefficients
de $[S]$ et des $n_{i-1}$ matrices $[S']$ associées aux
zones sélectionnées au rang $i-1$

SÉLECTION de $n_i$ zones donnant les écarts les plus faibles

non $\quad i = k$

oui

CALCUL DES $n_{k-1}$ ÉCARTS:
$e_k = \sum (s_j - s'_j)^2$
$j = 1$ à $p_t$, $\quad$ pour les $n_{k-1}$ zones
sélectionnées à l'étape précédente à partir de tous
les coefficients des matrices correspondants

SÉLECTION de la zone pour laquelle l'écart est le plus faible

oui $\quad$ ÉCART < SEUIL $\quad$ non

OBJET DANS LA
ZONE SÉLECTIONNÉE

PAS L'OBJET
DANS L'IMAGE

FIN

Office européen
des brevets

**RAPPORT DE RECHERCHE EUROPEENNE**

Numero de la demande

EP 91 40 2654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEE PACIFIC RIM CONFERENCE OC COMMUNICATIONS, COMPUTERS AND SIGNAL PROCESSING, 4-5 JUIN 1987, VICTORIA, B.C.,CANADA, IEEE, NEW YORK, US pages 77 - 88; ZHI-QIANG LIU ET AL.: 'IMAGE DETECTION BY SINGULAR VALUE DECOMPOSITION OF IMAGE MATRICES' * CHAPITRES 2,3 * --- | 1 | G06K9/52 G06K9/68 |
| A | IEEE TRANSACTIONS ON PATTERN ANALYSIS AND MACHINE INTELLGENCE, vol. PAMI7, no. 3, Mai 1985, NEW YORK US pages 338 - 344; ARDESHIR GOSHTASBY: 'Template Matching in Rotated Images' * CHAPITRE III * ----- | 1 | |
| | | | **DOMAINES TECHNIQUES RECHERCHES (Int. Cl.5)** |
| | | | G06K |

Le présent rapport a été établi pour toutes les revendications

| Lieu de la recherche | Date d'achèvement de la recherche | Examinateur |
|---|---|---|
| LA HAYE | 22 JANVIER 1992 | SONIUS M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................
& : membre de la même famille, document correspondant

EPO FORM 1503 03.82 (P0402)